# EUROPEAN PATENT APPLICATION

(11) **EP 4 852 269 A1**
(43) Date of publication of application: **09.12.2026**
(21) Application number: 25839971.6
(22) Date of filing: 24.06.2025
(51) Int. Cl.: H02J 3/38, H02M 7/44, H02M 1/00

(54) **INVERTER, MAXIMUM POWER POINT TRACKING METHOD, AND PHOTOVOLTAIC POWER GENERATION SYSTEM**

(30) Priority: 19.07.2024 CN 202410974008
(71) Applicant: Huawei Digital Power Technologies Co., Ltd., Shenzhen, Guangdong 518043 (CN)
(72) Inventor: HUANG, Jiechun, Shenzhen, Guangdong 518043 (CN); GU, Guilei, Shenzhen, Guangdong 518043 (CN); WANG, Yu, Shenzhen, Guangdong 518043 (CN); PENG, Zhong, Shenzhen, Guangdong 518043 (CN)
(74) Representative: Gill Jennings & Every LLP
(86) International application number: PCT/CN2025/103164
(87) International publication number: WO 2026/016748

(57) **Abstract**

An inverter (21), a maximum power point tracking method, and a photovoltaic system (2) are provided. In the inverter, an input of a DC/DC conversion circuit (210a, 210b, ..., 210n) is connected to an output of a converter array (20a, 20b, ..., 20n), an input of a DC/AC conversion circuit (211) is connected to an output of the DC/DC conversion circuit, and an output of the DC/AC conversion circuit is connected to a power grid (4). The controller (212) controls the DC/DC conversion circuit to periodically perform the following operations: controlling the DC/DC conversion circuit to be in a maximum power point tracking mode, to perform maximum power point tracking on the converter array; after a preset duration, controlling the DC/DC conversion circuit to exit the maximum power point tracking mode, and controlling input power of the DC/DC conversion circuit to decrease by a preset power value; and after the input power of the DC/DC conversion circuit decreases by the preset power value, controlling the DC/DC conversion circuit to re-enter the maximum power point tracking mode, to identify an actual maximum power point of the converter array.

## Description

This application claims priority to Chinese Patent Application No. 202410974008.1, filed with the China National Intellectual Property Administration on July 19, 2024, and entitled "INVERTER, MAXIMUM POWER POINT TRACKING METHOD, AND PHOTOVOLTAIC SYSTEM", which is incorporated herein by reference in its entirety.

### TECHNICAL FIELD

This application relates to the field of photovoltaic power generation technologies, and in particular, to an inverter, a maximum power point tracking method, and a photovoltaic system.

### BACKGROUND

In a photovoltaic system, a converter array includes a plurality of converters. An input of each converter in the plurality of converters is configured to connect to one or more photovoltaic modules, and outputs of the plurality of converters are connected in series and then connected to a direct current end of an inverter. When the photovoltaic system supplies power, the inverter is configured to perform maximum power point tracking (maximum power point tracking, MPPT) on the converter array in real time, to ensure that the photovoltaic system supplies power to a power grid at a maximum power output.

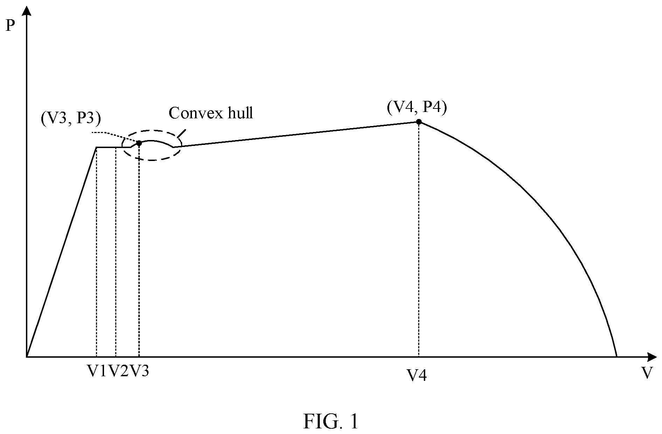

In a process in which the inverter performs maximum power point tracking on the converter array, an output power P-output voltage V curve of the converter array may be shown in FIG. 1. The P-V curve includes a constant power curve segment between (V1, P1) and (V4, P4). However, because the inverter is limited by sampling precision and nonlinearity, a convex hull may appear on the constant power curve segment. Once an input voltage operating point (namely, a point corresponding to an input voltage value in the P-V curve) of the inverter is located in the convex hull, the inverter mistakenly identifies a point (V3, P3) in the convex hull as a maximum power point. Consequently, the input voltage operating point of the inverter is stuck in the convex hull, and an actual maximum power point, for example, the point (V4, P4) cannot be tracked.

### SUMMARY

This application provides an inverter, a maximum power point tracking method, and a photovoltaic system, to intelligently identify an actual maximum power point of a converter array, thereby avoiding misidentifying another point (for example, a point in a convex hull) in a P-V curve of the converter array as a maximum power point, and improving accuracy of identifying the maximum power point.

According to a first aspect, an embodiment of this application provides an inverter. The inverter is configured to be connected between a converter array including a plurality of DC/DC converters connected in series and a power grid to perform energy conversion. The inverter includes a direct current DC (direct current, DC)/DC conversion circuit, a DC/AC alternating current (alternating current, AC) conversion circuit, and a controller. There may be one or more DC/DC conversion circuits. An input of the DC/DC conversion circuit is configured to connect to an output of the converter array, an input of the DC/AC conversion circuit is connected to an output of the DC/DC conversion circuit, and an output of the DC/AC conversion circuit is configured to connect to the power grid. The controller is configured to control the DC/DC conversion circuit to periodically perform the following operations. The controller is configured to control the DC/DC conversion circuit to be in a maximum power point tracking mode, to perform maximum power point tracking on the converter array. Further, the controller is further configured to: after a preset duration, control the DC/DC conversion circuit to exit the maximum power point tracking mode, and control input power of the DC/DC conversion circuit to decrease by a preset power value. It should be understood that, in a process in which the input power of the DC/DC conversion circuit decreases by the preset power value, an input voltage operating point of the DC/DC conversion circuit continuously moves in a direction in which an output voltage increases in an output power P-output voltage V curve of the converter array, until the input voltage operating point is located on a right slope of the P-V curve. The input voltage operating point of the DC/DC conversion circuit is also an input voltage operating point of the inverter. Furthermore, the controller is further configured to: after the input power of the DC/DC conversion circuit decreases by the preset power value, control the DC/DC conversion circuit to re-enter the maximum power point tracking mode, to intelligently identify an actual maximum power point of the converter array.

According to this embodiment of this application, power limiting may be periodically performed on the DC/DC conversion circuit, so that the input voltage operating point of the inverter is located on the right slope of the P-V curve, and it is ensured that the DC/DC conversion circuit starts to perform maximum power point tracking on the converter array from the right slope of the P-V curve, to intelligently identify the actual maximum power point of the converter array, thereby avoiding misidentifying another point (for example, a point in a convex hull) in the P-V curve of the converter array as a maximum power point, and improving accuracy of identifying the maximum power point. After the actual maximum power point of the converter array is identified, it can be ensured that the converter array operates on a high-voltage side of a constant power curve segment in the P-V curve, thereby reducing a voltage difference between an output voltage and an input voltage of the converter array, and improving efficiency of the converter array. In addition, this also reduces a voltage difference between an input voltage of the inverter and a direct current bus voltage of the inverter, thereby effectively improving an energy yield of the inverter. The applicability is high.

Optionally, the controller is further configured to: when the input power of the DC/DC conversion circuit is less than or equal to a mode exit threshold, control the DC/DC conversion circuit to exit the maximum power point tracking mode, and control input power of the DC/DC conversion circuit to decrease by a preset power value. The mode exit threshold is less than estimated maximum power of the converter array, and the estimated maximum power may be determined based on an open-circuit voltage of the converter array. Optionally, the controller is further configured to: after a preset duration, when input power of the DC/DC conversion circuit is less than or equal to a mode exit threshold, control the DC/DC conversion circuit to exit the maximum power point tracking mode, and control input power of the DC/DC conversion circuit to decrease by a preset power value. According to this embodiment of this application, it can be ensured that an input voltage operating point present when the DC/DC conversion circuit starts to perform maximum power point tracking is located on the right slope of the P-V curve, thereby preventing the input voltage operating point of the DC/DC conversion circuit from being stuck in the convex hull and being incapable of exiting, and greatly reducing an energy yield loss of the inverter.

In a possible implementation, when the input power of the DC/DC conversion circuit is less than or equal to a power threshold, the preset power value is a fixed value. According to this embodiment of this application, a size of the preset power value can be flexibly adjusted based on the input power of the DC/DC conversion circuit, to ensure that an input voltage operating point present after power limiting is performed on the DC/DC conversion circuit exits the convex hull and is located on the right slope of the P-V curve.

In a possible implementation, when the input power of the DC/DC conversion circuit is greater than a power threshold, the preset power value is k times the input power of the DC/DC conversion circuit, and k is less than 1. According to this embodiment of this application, a size of the preset power value can be flexibly adjusted based on the input power of the DC/DC conversion circuit, to ensure that an input voltage operating point present after power limiting is performed on the DC/DC conversion circuit exits the convex hull and is located on the right slope of the P-V curve.

In a possible implementation, k is 0.01.

In a possible implementation, when the input power of the DC/DC conversion circuit is controlled to decrease by the preset power value, an input voltage of the DC/DC conversion circuit gradually increases. Therefore, the input voltage of the DC/DC conversion circuit is greater than an input voltage of the DC/DC conversion circuit in the maximum power point tracking mode. According to this embodiment of this application, the input voltage operating point of the DC/DC conversion circuit can continuously move in the direction in which the output voltage increases in the P-V curve until the input voltage operating point exits the convex hull in the P-V curve, thereby avoiding misidentification of a maximum power point caused by the input voltage operating point being stuck in the convex hull and cannot exit, and improving accuracy of identifying the maximum power point.

In a possible implementation, the inverter further includes a capacitor, where the capacitor is connected in parallel to the input of the DC/DC conversion circuit or the input of the DC/AC conversion circuit. The capacitor is configured to: when the input power of the DC/DC conversion circuit decreases by the preset power value, store energy output by the converter array, to increase the input voltage of the DC/DC conversion circuit. The energy output by the converter array is other energy other than energy output to the DC/DC conversion circuit in all energy output by the converter array, and a value of the other energy is the preset power value. It may be understood that, it can be learned from a feature of a capacitor that when energy stored in the capacitor increases, a voltage at two ends of the capacitor increases, so that the input voltage of the DC/DC conversion circuit increases. Therefore, in the process in which the input power of the DC/DC conversion circuit decreases by the preset power value, the input voltage operating point of the DC/DC conversion circuit continuously moves in the direction in which the output voltage increases in the P-V curve of the converter array, until the input voltage operating point is located on the right slope of the P-V curve.

According to a second aspect, an embodiment of this application provides a maximum power point tracking method for an inverter. The method may be performed by the inverter. The inverter is configured to be connected between a converter array including a plurality of DC/DC converters connected in series and a power grid. The inverter includes a DC/DC conversion circuit, a DC/AC conversion circuit, and a controller. The controller may control the DC/DC conversion circuit to periodically perform the following steps. The controller controls the DC/DC conversion circuit to be in a maximum power point tracking mode, to perform maximum power point tracking on the converter array. Further, after a preset duration, the controller controls the DC/DC conversion circuit to exit the maximum power point tracking mode, and controls input power of the DC/DC conversion circuit to decrease by a preset power value. Furthermore, after the input power of the DC/DC conversion circuit decreases by the preset power value, the controller controls the DC/DC conversion circuit to re-enter the maximum power point tracking mode, to intelligently identify an actual maximum power point of the converter array. This embodiment of this application can avoid misidentifying another point (for example, a point in a convex hull) in a P-V curve of the converter array as a maximum power point, thereby improving accuracy of identifying the maximum power point. After the actual maximum power point of the converter array is identified, it can be ensured that the converter array operates on a high-voltage side of a constant power curve segment, thereby improving efficiency of the converter array, and effectively improving an energy yield of the inverter. The applicability is high.

Optionally, when the input power of the DC/DC conversion circuit is less than or equal to a mode exit threshold, the controller controls the DC/DC conversion circuit to exit the maximum power point tracking mode, and controls input power of the DC/DC conversion circuit to decrease by a preset power value. The mode exit threshold is less than estimated maximum power of the converter array, and the estimated maximum power may be determined based on an open-circuit voltage of the converter array. Optionally, after a preset duration, when input power of the DC/DC conversion circuit is less than or equal to a mode exit threshold, the controller controls the DC/DC conversion circuit to exit the maximum power point tracking mode, and controls input power of the DC/DC conversion circuit to decrease by a preset power value. According to this embodiment of this application, it can be ensured that an input voltage operating point present when the DC/DC conversion circuit starts to perform maximum power point tracking is located on a right slope of the P-V curve, thereby preventing the input voltage operating point of the DC/DC conversion circuit from being stuck in the convex hull and being incapable of exiting, and greatly reducing an energy yield loss of the inverter.

In a possible implementation, when the input power of the DC/DC conversion circuit is less than or equal to a power threshold, the preset power value is a fixed value. According to this embodiment of this application, a size of the preset power value can be flexibly adjusted based on the input power of the DC/DC conversion circuit, to ensure that an input voltage operating point present after power limiting is performed on the DC/DC conversion circuit exits the convex hull and is located on the right slope of the P-V curve.

In a possible implementation, when the input power of the DC/DC conversion circuit is greater than a power threshold, the preset power value is k times the input power of the DC/DC conversion circuit, and k is less than 1. According to this embodiment of this application, a size of the preset power value can be flexibly adjusted based on the input power of the DC/DC conversion circuit, to ensure that an input voltage operating point present after power limiting is performed on the DC/DC conversion circuit exits the convex hull and is located on the right slope of the P-V curve.

In a possible implementation, k is 0.01.

In a possible implementation, when the input power of the DC/DC conversion circuit is controlled to decrease by the preset power value, the controller controls an input voltage of the DC/DC conversion circuit to be greater than an input voltage of the DC/DC conversion circuit in the maximum power point tracking mode. According to this embodiment of this application, the input voltage operating point of the DC/DC conversion circuit can continuously move in a direction in which an output voltage increases in the P-V curve until the input voltage operating point exits the convex hull in the P-V curve, thereby avoiding misidentification of a maximum power point caused by the input voltage operating point being stuck in the convex hull and cannot exit, and improving accuracy of identifying the maximum power point.

According to a third aspect, an embodiment of this application provides a photovoltaic system. The photovoltaic system includes a plurality of converter arrays and the inverter provided in any one of the first aspect and the possible implementations of the first aspect. Each converter array in the plurality of converter arrays includes a plurality of DC/DC converters connected in series. The inverter includes a plurality of DC/DC conversion circuits, a DC/AC conversion circuit, and a controller. All DC/DC conversion circuits in the plurality of DC/DC conversion circuits are connected to all converter arrays in the plurality of converter arrays in a one-to-one correspondence. An input of each DC/DC conversion circuit in the plurality of DC/DC conversion circuits is connected to an output of a converter array corresponding to the DC/DC conversion circuit in the plurality of DC/DC conversion circuits. Outputs of the plurality of DC/DC conversion circuits are connected to an input of the DC/AC conversion circuit, and an output of the DC/AC conversion circuit is configured to connect to a power grid. The controller is configured to control the plurality of DC/DC conversion circuits to periodically perform the following operations. The controller is configured to control the plurality of DC/DC conversion circuits to be in a maximum power point tracking mode, to perform maximum power point tracking on the converter arrays corresponding to the plurality of DC/DC conversion circuits. Further, the controller is further configured to: after a preset duration, control the plurality of DC/DC conversion circuits to exit the maximum power point tracking mode, and control input power of the plurality of DC/DC conversion circuits to decrease by a preset power value. Furthermore, the controller is further configured to: after the input power of the plurality of DC/DC conversion circuits decreases by the preset power value, control the plurality of DC/DC conversion circuits to re-enter the maximum power point tracking mode, to intelligently identify actual maximum power points of the plurality of converter arrays. According to this embodiment of this application, it can be ensured that the plurality of converter arrays all operate at the actual maximum power points, thereby ensuring that the photovoltaic system supplies power to the power grid at a maximum power output, and improving an energy yield of the photovoltaic system.

In a possible implementation, when input power of each DC/DC conversion circuit in the plurality of DC/DC conversion circuits is less than or equal to a power threshold, the preset power value is a fixed value. According to this embodiment of this application, a size of the preset power value can be flexibly adjusted based on the input power of each DC/DC conversion circuit, to ensure that an input voltage operating point present after power limiting is performed on each DC/DC conversion circuit exits a convex hull and is located on a right slope of a P-V curve.

In a possible implementation, when input power of each DC/DC conversion circuit in the plurality of DC/DC conversion circuits is greater than a power threshold, the preset power value is k times the input power of each DC/DC conversion circuit, and k is less than 1. According to this embodiment of this application, a size of the preset power value can be flexibly adjusted based on the input power of each DC/DC conversion circuit, to ensure that an input voltage operating point present after power limiting is performed on each DC/DC conversion circuit exits a convex hull and is located on a right slope of a P-V curve.

In a possible implementation, the inverter further includes a capacitor, where the capacitor is connected in parallel to the input of each DC/DC conversion circuit in the plurality of DC/DC conversion circuits or the input of the DC/AC conversion circuit. The capacitor is configured to: when the input power of the plurality of DC/DC conversion circuits decreases by the preset power value, store energy output by the converter arrays corresponding to the plurality of DC/DC conversion circuits, to increase an input voltage of the plurality of DC/DC conversion circuits. The energy output by the converter arrays corresponding to the plurality of DC/DC conversion circuits is other energy other than energy output to the plurality of DC/DC conversion circuits in all energy output by the converter arrays corresponding to the plurality of DC/DC conversion circuits, and a value of the other energy is the preset power value. It may be understood that, it can be learned from a feature of a capacitor that when energy stored in the capacitor increases, a voltage at two ends of the capacitor increases, so that the input voltage of the plurality of DC/DC conversion circuits increases. Therefore, in a process in which the input power of the plurality of DC/DC conversion circuits decreases by the preset power value, an input voltage operating point of the plurality of DC/DC conversion circuits continuously moves in a direction in which an output voltage increases in the P-V curve of the converter array, until the input voltage operating point is located on the right slope of the P-V curve.

It should be understood that mutual reference may be made to the implementations and beneficial effect of the foregoing aspects of this application.

### BRIEF DESCRIPTION OF DRAWINGS

FIG. 1 is a diagram of a PV curve of a converter array according to the conventional technology;
FIG. 2 is a diagram of a structure of a photovoltaic system according to an embodiment of this application;
FIG. 3 is a diagram of a circuit architecture of a photovoltaic system according to an embodiment of this application;
FIG. 4 is a diagram of a PV curve of a converter array according to an embodiment of this application;
FIG. 5 is a diagram of a circuit architecture of a DC/DC converter according to an embodiment of this application; and
FIG. 6 is a schematic flowchart of a maximum power point tracking method for an inverter according to an embodiment of this application.

### DESCRIPTION OF EMBODIMENTS

An inverter provided in this application is applicable to a plurality of application fields such as a new energy smart microgrid field, a power transmission and distribution field, a new energy field, a photovoltaic power generation field, a photovoltaic energy storage and power generation field, and a high-power converter field. This may be specifically determined based on an actual application scenario, and is not limited herein. The inverter provided in this application may adapt to different application scenarios, for example, a photovoltaic power supply application scenario, a photovoltaic energy storage power supply application scenario, or another application scenario. The following uses the photovoltaic power supply application scenario as an example for description. Details are not described below again.

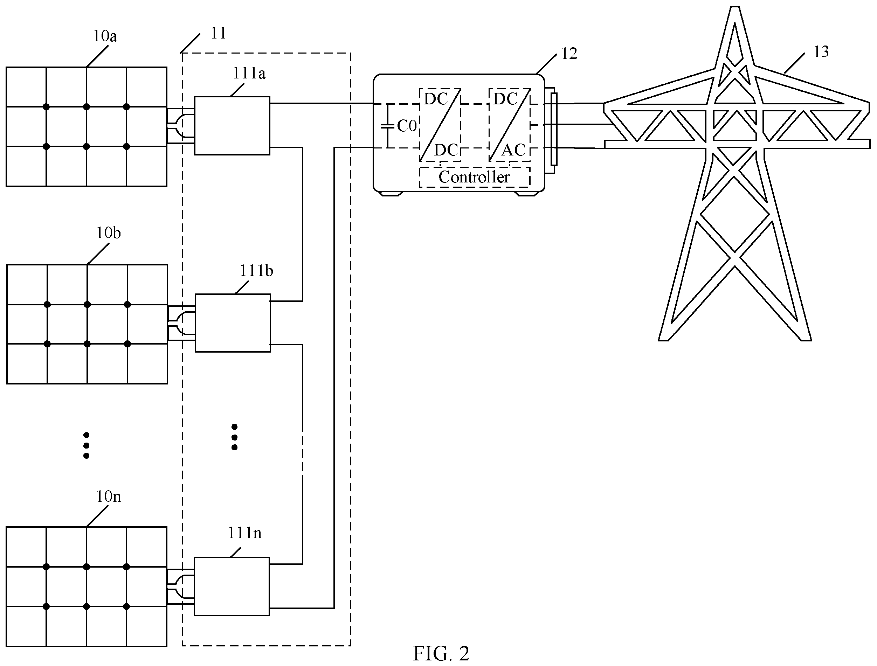

FIG. 2 is a diagram of a structure of a photovoltaic system according to this application. As shown in FIG. 2, the photovoltaic system includes a converter array 11 and an inverter 12. The converter array 11 includes a DC/DC converter 111a to a DC/DC converter 111n connected in series, and each DC/DC converter in the DC/DC converter 111a to the DC/DC converter 111n is configured to connect to at least one photovoltaic module. The DC/DC converter 111a to the DC/DC converter 111n may also be referred to as an optimizer. For example, an input of the DC/DC converter 111a is configured to connect to a photovoltaic module 10a, an input of the DC/DC converter 111b is configured to connect to a photovoltaic module 10b, ..., and an input of the DC/DC converter 111n is configured to connect to a photovoltaic module 10n. The inverter 12 includes a capacitor C0, a DC/DC conversion circuit, a DC/AC conversion circuit, and a controller. An input of the DC/DC conversion circuit is connected to an output of the converter array 11, and the capacitor C0 is connected in parallel between the input of the DC/DC conversion circuit and the output of the converter array 11. An output of the DC/DC conversion circuit is connected to an input of the DC/AC conversion circuit, and an output of the DC/AC conversion circuit is configured to connect to a power grid 13.

When the photovoltaic system supplies power to the power grid 13, each DC/DC converter in the DC/DC converter 111a to the DC/DC converter 111n is configured to convert a direct current voltage output by a photovoltaic module corresponding to the DC/DC converter into a first direct current voltage. In this case, the converter array 11 is configured to output a specific output voltage to the inverter 12, where the output voltage is a sum of first direct current voltages output by the DC/DC converter 111a to the DC/DC converter 111n. Further, the DC/DC conversion circuit is configured to: convert the output voltage output by the converter array 11 into a second direct current voltage, and output the second direct current voltage to the DC/AC conversion circuit. The DC/AC conversion circuit is configured to: invert the second direct current voltage into an alternating current voltage, and supply power to the power grid 13.

In a process in which the photovoltaic system supplies power to the power grid 13, the inverter 12 is further configured to perform maximum power point tracking on the converter array 11 in real time.

During specific implementation, the controller is configured to control the DC/DC conversion circuit to periodically perform the following operations.The controller is configured to control the DC/DC conversion circuit to be in a maximum power point tracking mode, to perform maximum power point tracking on the converter array 11. The maximum power point tracking mode is an operating mode in which the output voltage of the converter array 11 is controlled in real time, to enable the converter array 11 to supply power to the inverter 12 at a maximum power output.Further, the controller is further configured to: after a preset duration, control the DC/DC conversion circuit to exit the maximum power point tracking mode, and control input power of the DC/DC conversion circuit to decrease by a preset power value. It should be understood that, when the input power of the DC/DC conversion circuit decreases by the preset power value, the capacitor C0 is configured to store energy output by the converter array 11, to increase the input voltage of the DC/DC conversion circuit. The energy output by the converter array 11 is other energy other than energy output to the DC/DC conversion circuit in all energy output by the converter array 11, and a value of the other energy is the preset power value. It can be learned from a feature of a capacitor C0 that when energy stored in the capacitor C0 increases, a voltage at two ends of the capacitor C0 increases, that is, the input voltage of the DC/DC conversion circuit also increases. Therefore, in a process in which the input power of the DC/DC conversion circuit decreases by the preset power value, an input voltage operating point of the DC/DC conversion circuit continuously moves in a direction in which an output voltage increases in a P-V curve of the converter array 11, until the input voltage operating point is located on a right slope of the P-V curve. The input voltage operating point of the DC/DC conversion circuit is also an input voltage operating point of the inverter 12.

It is easy to understand that a location of the capacitor CO is not limited to the location shown in FIG. 1, and the location shown in FIG. 1 is merely an example. The capacitor C0 may alternatively be located at another location in a circuit in the inverter 12, or may even be a parasitic capacitor formed by the circuit. This is not limited in embodiments of this application.

Furthermore, the controller is further configured to: after the input power of the DC/DC conversion circuit decreases by the preset power value, control the DC/DC conversion circuit to re-enter the maximum power point tracking mode, to identify an actual maximum power point of the converter array 11.

According to this embodiment of this application, power limiting may be periodically performed on the DC/DC conversion circuit, so that the input voltage operating point of the inverter 12 is located on the right slope of the P-V curve, and it is ensured that the DC/DC conversion circuit starts to perform maximum power point tracking on the converter array 11 from the right slope of the P-V curve, to intelligently identify the actual maximum power point of the converter array 11, thereby avoiding misidentifying another point (for example, a point in a convex hull) in the P-V curve of the converter array 11 as a maximum power point, and improving accuracy of identifying the maximum power point. In addition, it can be ensured that the converter array 11 operates at the actual maximum power point, thereby ensuring that the photovoltaic system supplies power to the power grid 13 at a maximum power output, and improving an energy yield of the photovoltaic system.

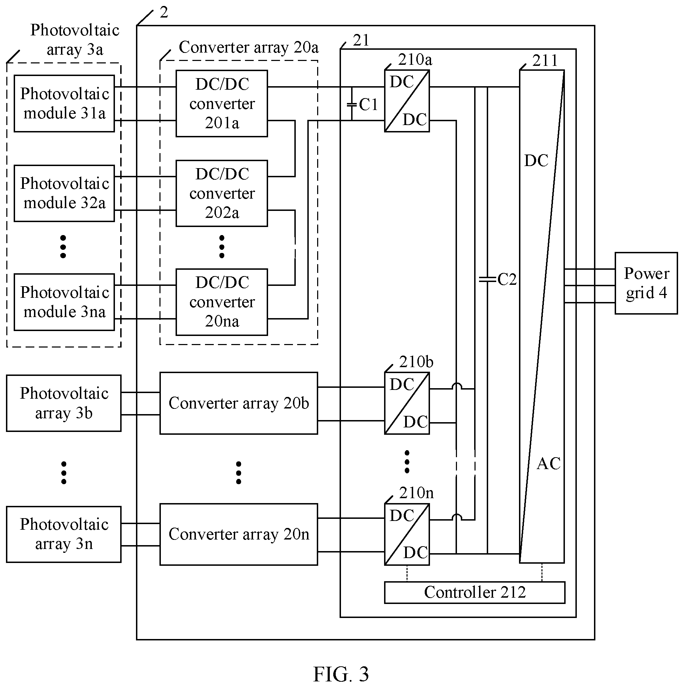

FIG. 3 is a diagram of a circuit architecture of a photovoltaic system according to an embodiment of this application. As shown in FIG. 3, the photovoltaic system 2 includes a converter array 20a to a converter array 20n and an inverter 21. Each converter array in the converter array 20a to the converter array 20n includes a plurality of DC/DC converters connected in series, and each DC/DC converter in the plurality of DC/DC converters is configured to connect to at least one photovoltaic module (namely, one or more photovoltaic modules). For example, the converter array 20a includes a DC/DC converter 201a to a DC/DC converter 20na connected in series, the DC/DC converter 201a is configured to connect to a photovoltaic module 31a, the DC/DC converter 202a is configured to connect to a photovoltaic module 32a, ..., and the DC/DC converter 20na is configured to connect to a photovoltaic module 3na. The photovoltaic module 31a, the photovoltaic module 32a, ..., and the photovoltaic module 3na form a photovoltaic array 3a. The converter array 20b is configured to connect to a photovoltaic array 3b, ..., and the converter array 20n is configured to connect to a photovoltaic array 3n. For a specific structure of each converter array in the converter array 20b to the converter array 20n and a connection relationship between each converter array in the converter array 20b to the converter array 20n and a corresponding photovoltaic array, refer to the specific structure of the converter array 20a and the connection relationship between the converter array 20a and the photovoltaic array 3a. Details are not described herein again.

The inverter 21 is configured to be connected between a power grid 4 and the converter arrays 20a to 20n to perform energy conversion. Specifically, the inverter 21 is configured to: invert direct currents output by the converter array 20a to the converter array 20n into alternating currents, and supply power to the power grid 4. The inverter 21 includes a DC/DC conversion circuit 210a to a DC/DC conversion circuit 210n, a DC/AC conversion circuit 211, and a controller 212. The DC/DC conversion circuit 210a to the DC/DC conversion circuit 210n are connected to the converter array 20a to the converter array 20n in a one-to-one correspondence. An input of each DC/DC conversion circuit in the DC/DC conversion circuit 210a to the DC/DC conversion circuit 210n is configured to connect to an output of a converter array corresponding to the DC/DC conversion circuit. For example, an input of the DC/DC conversion circuit 210a is configured to connect to an output of the converter array 20a, an input of the DC/DC conversion circuit 210b is configured to connect to an output of the converter array 20b, ..., and an input of the DC/DC conversion circuit 210n is configured to connect to an output of the converter array 20n. Outputs of the DC/DC conversion circuit 210a to the DC/DC conversion circuit 210n are connected to an input of the DC/AC conversion circuit 211, and an output of the DC/AC conversion circuit 211 is configured to connect to the power grid 4.

The controller 212 is configured to control the DC/DC conversion circuit 210a to the DC/DC conversion circuit 210n to periodically perform the following operations. The controller 212 is configured to control the DC/DC conversion circuit 210a to the DC/DC conversion circuit 210n to be in a maximum power point tracking mode, to perform maximum power point tracking on the converter arrays corresponding to the DC/DC conversion circuit 210a to the DC/DC conversion circuit 210n. Further, the controller is further configured to: after a preset duration, control the DC/DC conversion circuit 210a to the DC/DC conversion circuit 210n to exit the maximum power point tracking mode, and control input power of the DC/DC conversion circuit 210a to the DC/DC conversion circuit 210n to decrease by a preset power value. Furthermore, the controller is further configured to: after the input power of the DC/DC conversion circuit 210a to the DC/DC conversion circuit 210n decreases by the preset power value, control the DC/DC conversion circuit 210a to the DC/DC conversion circuit 210n to re-enter the maximum power point tracking mode, to intelligently identify actual maximum power points of the converter array 20a to the converter array 20n.

According to this embodiment of this application, it can be ensured that the converter array 20a to the converter array 20n all operate at the actual maximum power points, thereby ensuring that the photovoltaic system 2 supplies power to the power grid 4 at a maximum power output, and improving an energy yield of the photovoltaic system 2.

For ease of description, the following uses the DC/DC conversion circuit 210a and the converter array 20a as an example to illustratively describe a specific implementation in which the inverter 21 performs maximum power point tracking on the converter array.

The controller 212 is configured to control the DC/DC conversion circuit 210a to periodically perform the following operations. Periodic duration may be set in advance, or may be determined by an electronic element in the DC/DC conversion circuit.

The controller 212 is configured to control the DC/DC conversion circuit 210a to be in a maximum power point tracking mode, to perform maximum power point tracking on the converter array 20a. Further, the controller 212 is further configured to: after a preset duration, control the DC/DC conversion circuit 210a to exit the maximum power point tracking mode, and control input power of the DC/DC conversion circuit 210a to decrease by a preset power value. The preset duration may be set in advance, or may be determined by an electronic element in the DC/DC conversion circuit. This is not limited herein. In addition, the preset duration is less than the periodic duration. It should be understood that, when the input power of the DC/DC conversion circuit 210a decreases by the preset power value, a capacitor in the inverter 21 is configured to store energy output by the converter array 20a, to increase an input voltage of the DC/DC conversion circuit 210a. The energy output by the converter array 20a is other energy other than energy output to the DC/DC conversion circuit 210a in all energy output by the converter array 20a, and a value of the other energy is the preset power value. For example, the capacitor in the inverter 21 may be an input capacitor C1 connected in parallel to an input of the DC/DC conversion circuit 210a, or a bus capacitor C2 connected in parallel to the input of the DC/AC conversion circuit 211, or a parasitic capacitor formed by a circuit in the inverter 21. The parasitic capacitor may be equivalent to the input capacitor C1 or a bus capacitor C2. It can be learned from a feature of a capacitor that when energy stored in the capacitor increases, a voltage at two ends of the capacitor increases, so that the input voltage of the DC/DC conversion circuit 210a gradually increases. Therefore, in a process in which the input power of the DC/DC conversion circuit 210a decreases by the preset power value, an input voltage operating point of the DC/DC conversion circuit 210a continuously moves in a direction in which an output voltage increases in a P-V curve of the converter array 20a, until the input voltage operating point is located on a right slope of the P-V curve. The input voltage operating point of the DC/DC conversion circuit 210a is also an input voltage operating point of the inverter 21. Furthermore, the controller 212 is further configured to: after the input power of the DC/DC conversion circuit 210a decreases by the preset power value, control the DC/DC conversion circuit 210a to re-enter the maximum power point tracking mode, to intelligently identify an actual maximum power point of the converter array 20a.

According to this embodiment of this application, power limiting may be periodically performed on the DC/DC conversion circuit 210a, so that the input voltage operating point of the inverter 21 is located on the right slope of the P-V curve, and it is ensured that the DC/DC conversion circuit 210a starts to perform maximum power point tracking on the converter array 20a from the right slope of the P-V curve, to intelligently identify the actual maximum power point of the converter array 20a, thereby avoiding misidentifying another point (for example, a point in a convex hull) in the P-V curve as a maximum power point, and improving accuracy of identifying the maximum power point. After the actual maximum power point of the converter array 20a is identified, it can be ensured that the converter array 20a operates on a high-voltage side of a constant power curve segment in the P-V curve, thereby reducing a voltage difference between an output voltage and an input voltage of the converter array 20a, and improving efficiency of the converter array 20a. In addition, this also reduces a voltage difference between an input voltage of the inverter 21 and a direct current bus voltage (namely, a voltage at two ends of the bus capacitor C2), thereby effectively improving an energy yield of the inverter 21. The applicability is high.

It may be understood that, when the P-V curve includes a convex hull, compared with an energy yield loss caused by the input voltage operating point being stuck in the convex hull and cannot exit, an energy yield loss caused by periodically performing power limiting on the DC/DC conversion circuit 210a is smaller. Therefore, after power limiting is periodically performed on the DC/DC conversion circuit 210a, it can be ensured that an input voltage operating point present when the DC/DC conversion circuit 210a starts to perform maximum power point tracking is located on the right slope of the P-V curve, thereby preventing the input voltage operating point of the DC/DC conversion circuit 210a from being stuck in the convex hull and being incapable of exiting, and greatly reducing an energy yield loss of the inverter 21.

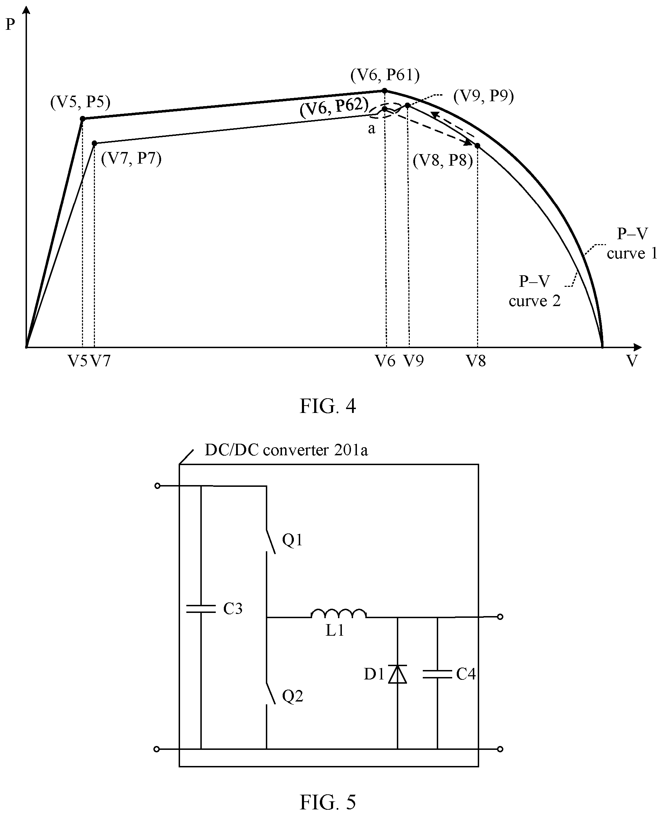

It may be understood that, in the constant power curve segment in the P-V curve, fluctuation of output power of the converter array 20a is less than a fluctuation threshold. In other words, in the constant power curve segment, the output power of the converter array 20a is greater than or equal to a difference between constant output power and the fluctuation threshold, and is less than or equal to a sum of the constant output power and the fluctuation threshold. The constant output power and the fluctuation threshold may be preset values, or may be values determined based on an internal component of the converter array 20a and an internal component of the inverter 21. The fluctuation threshold is generally one thousandth of the constant output power. For example, when the P-V curve of the converter array 20a is shown in FIG. 4, the constant power curve segment may be a curve segment between a point (V5, P5) and a point (V6, P61) in a P-V curve 1, and a right slope of the P-V curve 1 may be a curve segment on a right side of the point (V6, P61) in the P-V curve 1. Alternatively, the constant power curve segment may be a curve segment between a point (V7, P7) and a point (V9, P9) in a P-V curve 2, and a right slope of the P-V curve 2 may be a curve segment on a right side of the point (V9, P9) in the P-V curve 2.

It may be understood that when the inverter 21 is applied to a photovoltaic energy storage and power generation system, the inverter 21 is further configured to: invert a direct current output by an energy storage device (not shown in the figure) into an alternating current, and supply power to the power grid 4. Optionally, the inverter 21 is further configured to convert an alternating current output by the power grid 4 into a direct current, and charge the energy storage device. In this case, both the input of the DC/DC conversion circuit 210a and the input of the DC/AC conversion circuit 211 are replaced with outputs, and both an output of the DC/DC conversion circuit 210a and the output of the DC/AC conversion circuit 211 are replaced with inputs.

When the input power of the DC/DC conversion circuit 210a is less than or equal to a power threshold, the preset power value is a fixed value. The power threshold and the fixed value may be determined based on sampling precision of the inverter 21. For example, the power threshold may be 3 kW, and the fixed value may be 10 W. When the input power of the DC/DC conversion circuit 210a is greater than a power threshold, the preset power value is k times the input power of the DC/DC conversion circuit 210a, and k is less than 1. For example, k is 0.01. According to this embodiment of this application, a size of the preset power value can be flexibly adjusted based on the input power of the DC/DC conversion circuit 210a, to ensure that an input voltage operating point present after power limiting is performed on the DC/DC conversion circuit 210a exits the convex hull and is located on the right slope of the P-V curve.

After determining the preset power value based on the input power of the DC/DC conversion circuit 210a, the controller 212 is further configured to: after a preset duration, control the DC/DC conversion circuit 210a to exit the maximum power point tracking mode, and control the input power of the DC/DC conversion circuit 210a to decrease by the preset power value. Optionally, the controller 212 is further configured to: when the input power of the DC/DC conversion circuit 210a is less than or equal to a mode exit threshold, control the DC/DC conversion circuit 210a to exit the maximum power point tracking mode, and control the input power of the DC/DC conversion circuit 210a to decrease by the preset power value. The input power of the DC/DC conversion circuit 210a may be detected by a power detection circuit inside the controller 212, or may be detected by a power detection device disposed outside the controller 212 and then delivered to the controller 212. The mode exit threshold is a threshold indicating the DC/DC conversion circuit 210a to exit the maximum power point tracking mode. The mode exit threshold is less than estimated maximum power of the converter array 20a, and the estimated maximum power may be determined based on an open-circuit voltage of the converter array 20a. Optionally, the controller 212 is further configured to: after a preset duration, when the input power of the DC/DC conversion circuit 210a is less than or equal to a mode exit threshold, control the DC/DC conversion circuit 210a to exit the maximum power point tracking mode, and control the input power of the DC/DC conversion circuit 210a to decrease by the preset power value. According to this embodiment of this application, it can be ensured that an input voltage operating point present when the DC/DC conversion circuit 210a starts to perform maximum power point tracking is located on the right slope of the P-V curve, thereby preventing the input voltage operating point of the DC/DC conversion circuit 210a from being stuck in the convex hull and being incapable of exiting, and greatly reducing an energy yield loss of the inverter 21.

When the input power of the DC/DC conversion circuit 210a is controlled to decrease by the preset power value, an input voltage of the DC/DC conversion circuit 210a gradually increases. Therefore, the input voltage of the DC/DC conversion circuit 210a is greater than an input voltage of the DC/DC conversion circuit 210a in the maximum power point tracking mode. According to this embodiment of this application, the input voltage operating point of the DC/DC conversion circuit 210a can continuously move in the direction in which the output voltage increases in the P-V curve until the input voltage operating point exits the convex hull in the P-V curve, thereby avoiding misidentification of a maximum power point caused by the input voltage operating point being stuck in the convex hull and cannot exit, and improving accuracy of identifying the maximum power point.

For example, at a moment t1, the P-V curve of the converter array 20a may be shown by the P-V curve 1 in FIG. 4. In this case, the input voltage operating point of the DC/DC conversion circuit 210a is the point (V6, P61), and the point (V6, P61) is a maximum power point of the converter array 20a at the moment t1. At a moment t2, because of changes in an external environment (such as light and temperature), the P-V curve of the converter array 20a also changes accordingly, which may be specifically shown by the P-V curve 2 in FIG. 4. The input voltage operating point of the DC/DC conversion circuit 210a changes from the point (V6, P61) to a point (V6, P62), and the point (V6, P62) is located in a convex hull a in the P-V curve 2. In this case, the controller 212 is configured to control the DC/DC conversion circuit 210a to exit the maximum power point tracking mode, and control, in a closed-loop control manner or an open-loop control manner, the input power of the DC/DC conversion circuit 210a to decrease by the preset power value. In a process of reducing the preset power value, the input power of the DC/DC conversion circuit 210a gradually decreases from a power value P62 to a power value P8, and the input voltage operating point of the DC/DC conversion circuit 210a changes from the point (V6, P61) to a point (V8, P8). In this case, the input voltage operating point of the DC/DC conversion circuit 210a has exited the convex hull a and is located on the right slope of the P-V curve 2. After the input voltage operating point of the DC/DC conversion circuit 210a is located on the right slope, the controller 212 is configured to control the DC/DC conversion circuit 210a to re-enter the maximum power point tracking mode. Specifically, one of a perturb and observe method, a fixed voltage observation method, and an incremental conductance method is used to perform maximum power point tracking on the converter array 20a, to identify a right inflection point (namely, a high-voltage-side inflection point), for example, the point (V9, P9), of the constant power curve segment as an actual maximum power point of the converter array 20a at the moment t2. According to this embodiment of this application, power limiting can be performed on the DC/DC conversion circuit 210a, so that the input voltage operating point of the DC/DC conversion circuit 210a exits the convex hull a, thereby greatly reducing an energy yield loss of the inverter 21.

The perturb and observe method is used as an example for description. The controller 212 is configured to: adjust an input voltage or an input current of the DC/DC conversion circuit 210a, and determine a power change trend of the input power of the DC/DC conversion circuit 210a before and after the input voltage or the input current is adjusted. It should be understood that the input power of the DC/DC conversion circuit 210a before the input voltage or the input current is adjusted may be referred to as first input power for short, and the input power of the DC/DC conversion circuit 210a after the input voltage or the input current is adjusted may be referred to as second input power for short. When the second input power is greater than the first input power, the power change trend is an increasing trend. When the second input power is less than or equal to the first input power, the power change trend is a decreasing trend.

Further, the controller 212 is further configured to continuously adjust the input voltage or the input current of the DC/DC conversion circuit 210a based on the power change trend, until the maximum power point of the converter array 20a is identified. During specific implementation, an example in which the input voltage of the DC/DC conversion circuit 210a is continuously adjusted is used for description. The controller 212 is configured to: when the power change trend is an increasing trend, and an adjusted input voltage is greater than the input voltage before adjustment, continue to increase the input voltage of the DC/DC conversion circuit 210a; or when the power change trend is a decreasing trend, and an adjusted input voltage is greater than the input voltage before adjustment, decrease the input voltage of the DC/DC conversion circuit 210a. The controller 212 is further configured to: when the power change trend is an increasing trend, and an adjusted input voltage is less than the input voltage before adjustment, continue to decrease the input voltage of the DC/DC conversion circuit 210a; or when the power change trend is a decreasing trend, and an adjusted input voltage is less than the input voltage before adjustment, increase the input voltage of the DC/DC conversion circuit 210a. For example, when maximum power point tracking is performed starting from the point (V8, P8), the controller 212 is configured to reduce the input voltage of the DC/DC conversion circuit 210a, so that the input voltage operating point of the DC/DC conversion circuit 210a moves from the point (V8, P8) to the point (V9, P9). When |P8-P9| is less than or equal to a preset threshold, the point (V9, P9) is identified as the maximum power point of the converter array 20a. When |P8-P9| is greater than a preset threshold, the input voltage of the DC/DC conversion circuit 210a continues to be reduced until the actual maximum power point of the converter array 20a is identified. The preset threshold may also be referred to as a constant power threshold. For example, the preset threshold may be five ten-thousandths of the first input power.

It should be understood that, for a specific implementation in which the controller 212 performs maximum power point tracking on another converter array in the converter array 20a to the converter array 20n, refer to the related descriptions of performing, by the controller 212, maximum power point tracking on the converter array 20a by using the DC/DC conversion circuit 210a. Details are not described herein again.

FIG. 5 is a circuit schematic of a DC/DC converter according to an embodiment of this application. As shown in FIG. 5, the DC/DC converter 201a shown in FIG. 3 includes a capacitor C3, a capacitor C4, a switch Q1, a switch Q2, an inductor L1, and a diode D1. Two ends of the capacitor C4 are configured to connect to the photovoltaic module 31a, the switch Q1 and the switch Q2 are connected in series and then connected in parallel to the capacitor C4, a series connection point of the switch Q1 and the switch Q2 is connected to one end of the diode D1 and one end of the capacitor C4 via the inductor L1, and one end of the switch Q2 is connected to the other end of the diode D1 and the other end of the capacitor C4. The controller inside the DC/DC converter 201a is configured to control the switch Q1 and the switch Q2 to be turned on in a complementary manner, to convert a direct current voltage output by the photovoltaic module 31a into a target direct current voltage and output the target direct current voltage to the DC/DC conversion circuit 210a for power supply. In this embodiment of this application, the circuit topology of the DC/DC converter 201a shown in FIG. 5 is merely an example, and the circuit topology of the DC/DC converter 201a is not limited herein. It should be understood that, for a circuit topology and an operating principle of another converter in the DC/DC converter 201a to the DC/DC converter 20na, refer to the foregoing descriptions of the circuit topology and the operating principle of the DC/DC converter 201a. Details are not described herein again.

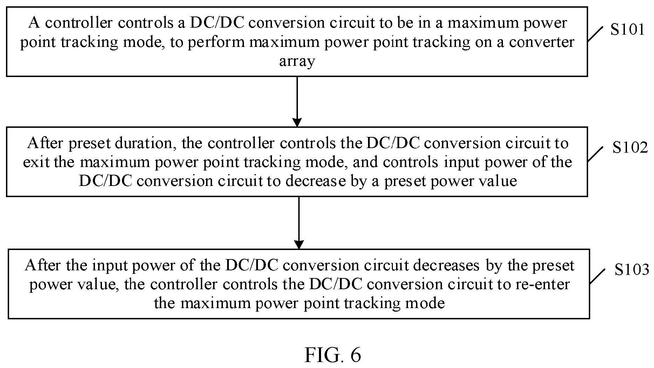

FIG. 6 is a schematic flowchart of a maximum power point tracking method for an inverter according to an embodiment of this application. The method may be performed by an inverter, for example, performed by a controller inside the inverter. The inverter is configured to be connected between a converter array including a plurality of DC/DC converters connected in series and a power grid. The inverter includes a DC/DC conversion circuit, a DC/AC conversion circuit, and a controller. The controller may control the DC/DC conversion circuit to periodically perform the following steps, specifically including step S101 to step S103 shown in FIG. 6.

Step S101: The controller controls the DC/DC conversion circuit to be in a maximum power point tracking mode, to perform maximum power point tracking on the converter array.

Step S102: After a preset duration, the controller controls the DC/DC conversion circuit to exit the maximum power point tracking mode, and controls input power of the DC/DC conversion circuit to decrease by a preset power value.

When the input power of the DC/DC conversion circuit is less than or equal to a power threshold, the preset power value is a fixed value. When the input power of the DC/DC conversion circuit is greater than a power threshold, the preset power value is k times the input power of the DC/DC conversion circuit, and k is less than 1. For example, k is 0.01. According to this embodiment of this application, a size of the preset power value can be flexibly adjusted based on the input power of the DC/DC conversion circuit, to ensure that an input voltage operating point present after power limiting is performed on the DC/DC conversion circuit exits a convex hull and is located on a right slope of a P-V curve.

After determining the preset power value based on the input power of the DC/DC conversion circuit, the controller may further control, after a preset duration, the DC/DC conversion circuit to exit the maximum power point tracking mode, and control input power of the DC/DC conversion circuit to decrease by a preset power value. Optionally, when the input power of the DC/DC conversion circuit is less than or equal to a mode exit threshold, the controller may further control the DC/DC conversion circuit to exit the maximum power point tracking mode, and control input power of the DC/DC conversion circuit to decrease by a preset power value. The mode exit threshold is a threshold indicating the DC/DC conversion circuit to exit the maximum power point tracking mode. The mode exit threshold is less than estimated maximum power of the converter array, and the estimated maximum power may be determined based on an open-circuit voltage of the converter array. Optionally, after a preset duration, when input power of the DC/DC conversion circuit is less than or equal to a mode exit threshold, the controller may further control the DC/DC conversion circuit to exit the maximum power point tracking mode, and control input power of the DC/DC conversion circuit to decrease by a preset power value. According to this embodiment of this application, it can be ensured that an input voltage operating point present when the DC/DC conversion circuit starts to perform maximum power point tracking is located on a right slope of a P-V curve, thereby preventing the input voltage operating point of the DC/DC conversion circuit from being stuck in a convex hull and being incapable of exiting, and greatly reducing an energy yield loss of the inverter.

When the input power of the DC/DC conversion circuit is controlled to decrease by the preset power value, the controller controls an input voltage of the DC/DC conversion circuit to be greater than an input voltage of the DC/DC conversion circuit in the maximum power point tracking mode. According to this embodiment of this application, the input voltage operating point of the DC/DC conversion circuit can continuously move in a direction in which an output voltage increases in the P-V curve until the input voltage operating point exits the convex hull in the P-V curve, thereby avoiding misidentification of a maximum power point caused by the input voltage operating point being stuck in the convex hull and cannot exit, and improving accuracy of identifying the maximum power point.

Step S103: After the input power of the DC/DC conversion circuit decreases by the preset power value, the controller controls the DC/DC conversion circuit to re-enter the maximum power point tracking mode.

During specific implementation, the controller may use one of a perturb and observe method, a fixed voltage observation method, and an incremental conductance method to control the DC/DC conversion circuit to perform maximum power point tracking on the converter array, to intelligently identify an actual maximum power point of the converter array.

During specific implementation, for more operations performed by the controller in the maximum power point tracking method for the inverter provided in this application and beneficial effect corresponding to the operations, refer to the implementations performed by the controller in the inverter shown in FIG. 3 to FIG. 5 and the operating principles of the inverter and the beneficial effect corresponding to the implementations. Details are not described herein again.

The maximum power point tracking method provided in this application can avoid misidentifying another point (for example, a point in the convex hull) in the P-V curve of the converter array as the maximum power point, thereby improving accuracy of identifying the maximum power point. In addition, after the actual maximum power point of the converter array is identified, efficiency of the converter array can be improved, and an energy yield of the inverter can be effectively improved. The applicability is high.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An inverter, configured to be connected between a converter array comprising a plurality of DC/DC converters connected in series and a power grid, and to perform energy conversion, wherein the inverter comprises a direct current DC (direct current)/DC conversion circuit, a DC/alternating current AC (alternating current) conversion circuit, and a controller; an input of the DC/DC conversion circuit is configured to connect to an output of the converter array; and an input of the DC/AC conversion circuit is connected to an output of the DC/DC conversion circuit, and an output of the DC/AC conversion circuit is configured to connect to the power grid; and
the controller is configured to periodically:
control the DC/DC conversion circuit to be in a maximum power point tracking MPPT (Maximum Power Point Tracking) mode, to perform maximum power point tracking on the converter array;
after a preset duration, control the DC/DC conversion circuit to exit the maximum power point tracking mode, and control input power of the DC/DC conversion circuit to decrease by a preset power value; and
after the input power of the DC/DC conversion circuit decreases by the preset power value, control the DC/DC conversion circuit to re-enter the maximum power point tracking mode.

2. The inverter according to claim 1, wherein when the input power of the DC/DC conversion circuit is less than or equal to a power threshold, the preset power value is a fixed value.

3. The inverter according to claim 1, wherein when the input power of the DC/DC conversion circuit is greater than a power threshold, the preset power value is k times the input power of the DC/DC conversion circuit, and k is less than 1.

4. The inverter according to claim 3, wherein k is 0.01.

5. The inverter according to any one of claims 1 to 4, wherein when the input power of the DC/DC conversion circuit is controlled to decrease by the preset power value, an input voltage of the DC/DC conversion circuit is greater than an input voltage of the DC/DC conversion circuit in the maximum power point tracking mode.

6. The inverter according to any one of claims 1 to 5, wherein the inverter further comprises a capacitor, wherein the capacitor is connected in parallel to the input of the DC/DC conversion circuit or the input of the DC/AC conversion circuit, to store, when the input power of the DC/DC conversion circuit decreases by the preset power value, energy output by the converter array, so as to increase the input voltage of the DC/DC conversion circuit.

7. A maximum power point tracking method, wherein the method is performed by an inverter, the inverter is configured to be connected between a converter array comprising a plurality of DC/DC converters connected in series and a power grid, and the inverter comprises a DC/DC conversion circuit, a DC/AC conversion circuit, and a controller; and the method comprises:
periodically:
controlling the DC/DC conversion circuit to be in a maximum power point tracking mode, to perform maximum power point tracking on the converter array;
after a preset duration, controlling the DC/DC conversion circuit to exit the maximum power point tracking mode, and controlling input power of the DC/DC conversion circuit to decrease by a preset power value; and
after the input power of the DC/DC conversion circuit decreases by the preset power value, controlling the DC/DC conversion circuit to re-enter the maximum power point tracking mode.

8. The maximum power point tracking method according to claim 7, wherein the method further comprises:
when the input power of the DC/DC conversion circuit is less than or equal to a power threshold, the preset power value is a fixed value.

9. The maximum power point tracking method according to claim 7, wherein the method further comprises:
when the input power of the DC/DC conversion circuit is greater than a power threshold, the preset power value is k times the input power of the DC/DC conversion circuit, and k is less than 1.

10. The maximum power point tracking method according to claim 9, wherein k is 0.01.

11. The maximum power point tracking method according to any one of claims 7 to 10, wherein the method further comprises:
when the input power of the DC/DC conversion circuit is controlled to decrease by the preset power value, controlling an input voltage of the DC/DC conversion circuit to be greater than an input voltage of the DC/DC conversion circuit in the maximum power point tracking mode.

12. A photovoltaic system, wherein the photovoltaic system comprises a plurality of converter arrays and an inverter, wherein
each converter array in the plurality of converter arrays comprises a plurality of DC/DC converters connected in series;
the inverter comprises a plurality of DC/DC conversion circuits, a DC/AC conversion circuit, and a controller, wherein all DC/DC conversion circuits in the plurality of DC/DC conversion circuits are connected to all converter arrays in the plurality of converter arrays in a one-to-one correspondence; an input of each DC/DC conversion circuit in the plurality of DC/DC conversion circuits is connected to an output of a converter array corresponding to the DC/DC conversion circuit in the plurality of DC/DC conversion circuits, outputs of the plurality of DC/DC conversion circuits are connected to an input of the DC/AC conversion circuit, and an output of the DC/AC conversion circuit is configured to connect to a power grid; and
the controller is configured to periodically:
control the plurality of DC/DC conversion circuits to be in the maximum power point tracking mode, to perform maximum power point tracking on the converter arrays corresponding to the plurality of DC/DC conversion circuits;
after a preset duration, control the plurality of DC/DC conversion circuits to exit the maximum power point tracking mode, and control input power of the plurality of DC/DC conversion circuits to decrease by a preset power value; and
after the input power of the plurality of DC/DC conversion circuits decreases by the preset power value, controlling the plurality of DC/DC conversion circuits to re-enter the maximum power point tracking mode.

13. The photovoltaic system according to claim 12, wherein when input power of each DC/DC conversion circuit in the plurality of DC/DC conversion circuits is less than or equal to a power threshold, the preset power value is a fixed value.

14. The photovoltaic system according to claim 12, wherein when input power of each DC/DC conversion circuit in the plurality of DC/DC conversion circuits is greater than a power threshold, the preset power value is k times the input power of each DC/DC conversion circuit, and k is less than 1.

15. The photovoltaic system according to any one of claims 12 to 14, wherein the inverter further comprises a capacitor, wherein the capacitor is connected in parallel to the input of each DC/DC conversion circuit in the plurality of DC/DC conversion circuits or the input of the DC/AC conversion circuit, to store, when the input power of the plurality of DC/DC conversion circuits decreases by the preset power value, energy output by the converter arrays corresponding to the plurality of DC/DC conversion circuits, so as to increase an input voltage of the plurality of DC/DC conversion circuits.
